# FASCICULE DE BREVET EUROPEEN

(11) **EP 3 844 888 B1**
(45) Date de publication et mention de la délivrance du brevet: **09.08.2023**
(21) Numéro de dépôt: 19779527.1
(22) Date de dépôt: 07.10.2019
(51) Int. Cl.: H04B 5/00, H04R 25/00, H04R 27/02

(54) **ANTENNE ET SYSTÈME AMOVIBLE DE TRANSMISSION SONORE À BOUCLE MAGNÉTIQUE POUR MALENTENDANTS**
ANTENNE UND ABNEHMBARES MAGNETSCHLEIFEN-AUDIO-ÜBERTRAGUNGSSYSTEM FÜR SCHWERHÖRIGE
ANTENNA AND REMOVABLE MAGNETIC-LOOP AUDIO TRANSMISSION SYSTEM FOR THE HARD OF HEARING

(30) Priorité: 08.10.2018 FR 1859286
(43) Date de publication de la demande: 07.07.2021
(73) Titulaire: Bacqueyrisses (SA), 33520 Bruges (FR)
(72) Inventeur: BACQUEYRISSES, Jean, 33110 LE BOUSCAT (FR); NIEDDU, Giovanni, 33700 MERIGNAC (FR)
(74) Mandataire: Ipside
(86) Numéro de dépôt international: PCT/EP2019/077114
(87) Numéro de publication internationale: WO 2020/074458

(56) Documents cités:
- FR-A1- 2 263 922

## Description

### DOMAINE DE L'INVENTION

La présente invention se rapporte au domaine de l'aide aux malentendants afin d'entendre les sons diffusés notamment dans des véhicules de transport public comme les autocars, les autobus, le tram, le train, les avions ou autre, ainsi que les sons diffusés dans des salles, par exemple, de réunion, de cinéma, d'école ou autres.

Plus particulièrement, l'invention concerne une antenne à induction magnétique générant un champ magnétique basse fréquence pouvant être capté par une personne malentendante au moyen de prothèses auditives équipées de la position « T » et calibrées pour corriger le handicap de chacune des oreilles indépendamment, ladite antenne étant réalisée sur circuit imprimé et ayant une impédance adaptée.

L'invention concerne également un système amovible et portatif de transmission sonore à boucle magnétique, un siège intégrant l'antenne de l'invention, et une cabine d'un véhicule de transport de passagers comportant ladite antenne, ledit système ou ledit siège.

### ARRIÈRE-PLAN TECHNOLOGIQUE

Pour les malentendants, les véhicules de transport sont des lieux où l'accès à l'information ne leur est accessible que par des moyens visuels rendant le transit et l'embarquement stressants. Ils entendent mal les messages de sécurité, ce qui les met en danger, leur sécurité n'est donc pas assurée. Les voyants et les panneaux d'affichage suppléent leur faible audition mais monopolisent alors toute leur attention.

La boucle magnétique est un système d'aide pour malentendants porteurs d'un appareil auditif, tel qu'une prothèse auditive équipée de la position « T ». Ce système leur permet de capter le son émis par une source sonore sans les interférences des bruits avoisinants. Ce son est transmis au moyen d'un champ magnétique émis par ladite boucle. Traditionnellement, la boucle magnétique est obtenue au moyen d'un fil de cuivre intégré le long des murs, ou dans le plafond d'une salle formant un circuit en boucle relié à un amplificateur et à une source sonore. Cette boucle magnétique transmet le son dénué des bruits ambiants à condition que le malentendant appareillé se trouve dans le périmètre d'action de la boucle. Ce type de boucle magnétique est très consommatrice d'énergie.

Comme la plupart des moyens de transport, les autocars sont dépourvus de boucle d'induction magnétique permettant aux malentendants d'écouter des messages sonores à travers leurs appareils auditifs. La difficulté d'implémenter cette technologie dans les moyens de transport réside dans le fait de créer un signal porteur d'alertes sonores claires, identifiables et partagées dans un milieu très métallique et pollué par des champs électromagnétiques parasites. En effet, cet environnement exige l'utilisation d'un champ magnétique d'une puissance extrêmement élevée, déconseillé, et de plus difficile à gérer quant à l'homogénéité du son.

Pour pallier cette problématique, la demande de brevet FR No. 1850636 propose un système de transmission de messages pour une cabine de véhicule de transport passager permettant de générer un champ d'induction magnétique dimensionné, et limité à une zone qui reste à proximité de la tête d'une ou plusieurs personnes. Pour créer cette zone, une boucle d'induction magnétique est intégrée dans un ou plusieurs sièges, dans le dossier ou l'appui-tête, et ladite boucle est reliée à un convertisseur de boucle intégrant un amplificateur de boucle. Toutefois, la personne malentendante est contrainte de s'asseoir dans un siège prédéterminé intégrant ce système.

La demande de brevet FR 2 263 922 A1 propose un exemple de système de transmission de messages audios dans un train. En particulier, il est proposé d'utiliser une boucle d'induction magnétique classique, installée de manière fixe sur les murs derrière un siège, ou sur les supports latéraux d'un appui-tête de siège. En outre les inconvenants mentionnés ci-avant, ce système a comme inconvenant d'être fixe et requérir une installation laborieuse.

### EXPOSÉ DE L'INVENTION

Un premier but de la présente invention est de proposer une boucle d'induction magnétique portative et pouvant être reliée directement sur des appareils utilisés comme sources d'émissions sonores classiques tel qu'un téléphone portable, un récepteur radio, un dispositif mp3, un ordinateur etc.

Un autre but de la présente invention est de proposer un système de transmission sonore à boucle magnétique capable de fournir un signal sonore sans bruits parasites dans une cabine d'un véhicule de transport de passagers, tout en étant amovible et réutilisable.

À cette fin l'invention propose une antenne d'induction magnétique pour la transmission des signaux sonores à une personne malentendante porteuse de prothèses auditives équipées d'une télécoil et calibrées pour corriger le handicap de chacune des oreilles indépendamment, ladite antenne comportant une boucle en cuivre. L'antenne de l'invention est particulière en ce qu'elle est réalisée sous forme de circuit imprimé sur un substrat souple ou rigide, et comporte une piste en cuivre formant des multiples spires adjacentes sur ledit substrat, et en ce que la longueur et la hauteur de la piste en cuivre déterminent une impédance de l'antenne de 16 Ω à 60 Ω, et de préférence de 32 Ω.

Avantageusement, ladite impédance permet de relier l'antenne avec des appareils électroniques portables comportant une sortie audio. Par exemple, une sortie casque d'un appareil électronique à amplificateur basses fréquences audio.

Selon un mode de réalisation, les spires de la piste de l'antenne forment un cadre déterminant une zone de projection localisée du champ magnétique de ladite antenne, et ledit cadre à une hauteur comprise entre 15 cm et 40 cm.

Selon un mode de réalisation, l'antenne comporte un connecteur de type jack audio, et un support de fixation pour installer ladite antenne sur un appui-tête de siège.

Par exemple, pour son installation sur un siège, l'antenne peut comporter une armature encadrant au moins partiellement l'antenne, ladite armature étant réalisée avec un fil métallique profilé pour former un cadre d'armature courbé coiffant un appui-tête, au moins partiellement, lorsqu'il est glissé par le dessus dudit appui-tête.

Selon un mode de réalisation, une forme du cadre d'armature est déterminée par deux tiges parallèles et sensiblement verticales, chaque tige comportant dans une partie supérieure et dans un plan perpendiculaire, un crochet déterminant une courbure de l'armature, des extrémités des crochets étant reliées optionnellement entre elles, et les extrémités inférieures des tiges étant prolongées et reliées entre elles par un segment en « U ».

Ce mode de réalisation permet d'une part de fixer l'antenne sur un appui-tête de siège, et d'autre part d'orienter le champ magnétique émis par l'antenne suivant la forme courbée de l'armature. La zone de projection du champ magnétique est ainsi adaptée à des personnes de différentes tailles.

L'invention propose également un système de transmission sonore à boucle magnétique pour des personnes malentendantes porteuses d'un appareil d'assistance audio, ledit système comportant une antenne selon l'invention et une source de signaux sonores comportant une sortie audio de type casque. Dans ce système l'antenne est reliée à ladite source de signaux sonores et transmet lesdits signaux sonores sous forme d'un champ magnétique compatible avec ledit appareil d'assistance audio de la personne malentendante.

Dans un mode de réalisation, la source des signaux sonores est un boîtier radio comportant une batterie rechargeable, un amplificateur basses fréquences avec une sortie audio jack, et un récepteur radio hautes fréquences recevant par radio fréquences des émissions sonores à transmettre par l'antenne.

Dans un autre mode de réalisation, la source des signaux sonores est intégrée sur le circuit imprimé de l'antenne et comporte au moins un récepteur radio hautes fréquences et un amplificateur basses fréquences.

Le système de l'invention comporte également un émetteur radio transmettant par radio fréquences au récepteur radio hautes fréquences les signaux sonores d'un haut-parleur ou de toute autre source des signaux sonores.

Le système peut comporter également une borne de recharge portative comportant un ou plusieurs emplacements de recharge compatibles avec un ou plusieurs boîtiers radio du système.

L'invention concerne aussi un siège rembourré comportant l'antenne de l'invention dans un appui-tête dudit siège, dans lequel :
- l'antenne comporte un boîtier radio autonome et hautes fréquences recevant par radio fréquences des émissions sonores à transmettre par l'antenne, et ;
- l'appui-tête comporte un coussin recouvert par une housse, ledit coussin comportant un logement de boîtier,
et dans lequel l'antenne est installée sur le coussin avec son boitier radio à l'intérieur du logement du coussin, et en-dessous de ladite housse.

Dans un mode de réalisation, le logement du coussin comporte des dimensions adaptées à recevoir le boitier radio et l'antenne, et ledit boitier radio et ladite antenne sont installés dans ledit logement.

Dans un autre mode de réalisation, le siège comporte un dossier intégrant l'appui-tête dans une portion supérieure avant dudit dossier, ledit dossier comportant un rembourrage formant en outre le coussin d'appui tête recevant l'antenne et le boîtier radio, et dans lequel le dossier comporte une housse présentant un segment têtière recouvrant au moins partiellement le coussin, et ledit segment têtière de la housse comporte au moins un moyen d'ouverture/fermeture pour accéder à l'antenne et au boîtier radio.

Finalement, l'invention concerne une cabine d'un véhicule de transport de passagers comportant a moins un système de transmission sonore suivant l'invention, ou au moins un siège suivant l'invention.

### PRÉSENTATION DE FIGURES

D'autres avantages, buts et caractéristiques particulières de la présente invention ressortiront de la description qui va suivre faite, dans un but explicatif et nullement limitatif, en regard des dessins annexés.
Figure 1. Un exemple d'antenne sur circuit imprimé selon l'invention.
Figure 2. Une vue de près, schématique, de la piste du circuit imprimé de l'antenne selon l'invention.
Figure 3. Un exemple d'une armature d'un support de fixation pour le système de transmission sonore de l'invention, détail a) vue en perspective, détail b) vue latérale.
Figure 4. Un exemple de système de transmission sonore selon l'invention.
Figure 5. Un autre exemple de système de transmission sonore selon l'invention.
Figure 6. Un exemple de système de transmission sonore comportant une armature selon l'invention
Figure 7. Un exemple de siège selon l'invention montrant schématiquement l'intégration d'une antenne de l'invention.
Figure 8. Un exemple de siège intégrant l'antenne de l'invention de manière non visible.

### DESCRIPTION DÉTAILLÉE DE MODES DE RÉALISATION DE L'INVENTION

L'invention concerne en première lieu une antenne sur circuit imprimé utilisée comme boucle d'induction magnétique, de manière à générer un champ magnétique basse fréquence permettant de transmettre des informations sonores aux malentendants porteurs d'un appareil d'assistance audio, tel qu'une prothèse auditive équipée de la position « T » ou « Télécoil ».

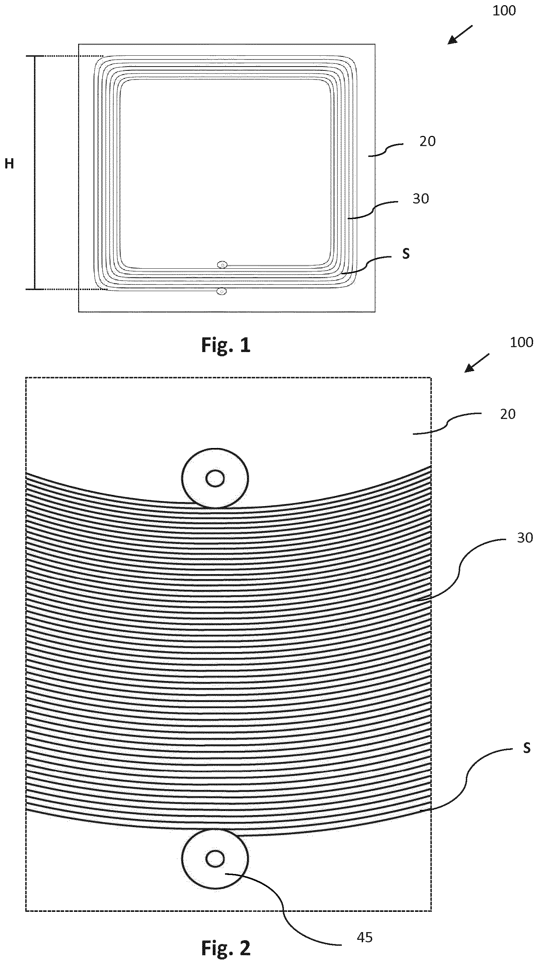

La figure 1 montre un exemple schématique d'une antenne sous forme d'un circuit imprimé selon l'invention. La figure 2 montre une vue de près d'une section du circuit imprimé selon l'invention. L'antenne 100 comporte un support 20 rigide ou souple sur lequel est intégrée une piste 30 en cuivre. La piste comporte des multiples spires S formant un cadre déterminant une zone de projection d'un champ magnétique.

À différence des bouclés magnétiques dans lesquelles un bobinage manuel d'un fil en cuivre est souvent nécessaire, au moins pour la finition de la boucle, l'antenne de l'invention est très avantageuse en ce que sa production sous circuit imprimé peut être complètement automatisée ou quasi complètement automatisée.

Dans l'exemple illustré à la figure 1, les spires **S** de la piste sont adjacentes les uns des autres et forment un cadre relativement large et des bords arrondis. Les dimensions du cadre sont choisies par exemple pour projeter un champ magnétique entourant la tête d'une personne positionnée devant ladite antenne ou appuyant sa tête sur l'antenne. Une hauteur **H** de ce cadre formé par la piste, est comprise entre 15 cm et 40 cm. La forme du cadre peut être adaptée à l'usage souhaité de l'antenne, par exemple ce cadre peut être sensiblement carré ou rectangulaire, ou circulaire ou ovale, ou une combinaison desdites formes.

L'antenne de l'invention est particulière en ce qu'elle a une impédance adaptée entre 16 Ω et 60 Ω, et de préférence à 32 Ω. Une impédance de l'antenne de 32 Ω assure une compatibilité idéale de l'antenne avec la plupart des appareils électroniques portables comportant un amplificateur à basses fréquences. C'est-à-dire, l'autonomie du dispositif est préservée et on obtient une puissance adaptée de champ magnétique de l'antenne. Bien entendu, l'antenne peut rester compatible avec lesdits appareils avec une impédance entre 16 Ω et 60 Ω, toutefois l'appareil électronique perdrait en autonomie en dessous de 32 Ω et on perdrait en puissance du champ magnétique lorsqu'on dépasse les 32 Ω.

L'impédance de l'antenne 100 est adaptée en raison d'une longueur et d'une hauteur de la piste 30, compte tenu de la résistivité du cuivre. La piste comportera donc un nombre de spires **S** permettant d'enrouler une piste de longueur prédéfinie pour adapter l'impédance de l'antenne à 32 Ω. Par exemple pour une antenne de forme carrée de 25 cm de côté imprimée avec une piste classique de cuivre de 35 microns de hauteur, l'antenne comporte environ cinquante spires **S.** Ce nombre de spires est bien entendu variable en fonction de la forme et des dimensions souhaitées pour l'antenne.

Le nombre de spires est également adapté pour avoir une intensité du champ magnétique maximal de 0 dB suivant les exigences des normes IEC 60118-4 et BS6083. Cette intensité est vérifiée à l'aide d'un appareil mesurant l'intensité du champ magnétique émis par l'antenne ainsi que le champ magnétique parasite, tel que le dispositif PROLOOP FSMplus.

L'antenne de l'invention ainsi obtenue émet un mini-champ magnétique localisé et basse fréquence, mais ayant toutefois une puissance suffisante pour transmettre un signal clair sans besoin d'un amplificateur de boucle onéreux et à forte consommation énergétique. L'antenne peut donc être reliée directement sur toute source classique d'émissions sonores capable de sortir sur des niveaux de 32 Ω au moyen d'un connecteur 40 type jack audio. Par jack on entend un connecteur électrique audio désignant la fiche mâle, fabriqué en taille standards de 2,5 mm, 3,5 mm et 6,35 mm.

L'antenne de l'invention peut être ainsi directement reliée à un appareil téléphone portable, un dispositif mp3, une radio, un ordinateur etc. Un point chaud 45 pour le câble du connecteur 40 est par exemple positionné sensiblement centré sur un des côtés de la piste, et à partir d'un des extrêmes de la piste, avec un point froid positionné à l'autre extrême de la piste.

Lorsque l'antenne est réalisée sur un substrat souple, ladite antenne peut être ensuite plastifiée de manière à conserver une certaine flexibilité de l'antenne et prévenir l'usure du circuit imprimé.

Dans un mode de réalisation, l'antenne de l'invention comporte un support de fixation permettant d'encadrer au moins partiellement l'antenne et de la fixer de manière réversible à un appuie-tête ou une têtière de siège. Pour référence, le support et l'antenne sont décrits suivant les axes d'orientation de l'appui tète de siège sur lequel est installée l'antenne. L'avant est donc défini suivant un axe horizontal X et suivant l'orientation d'un passager assis sur un siège en position droite et regardant devant lui.

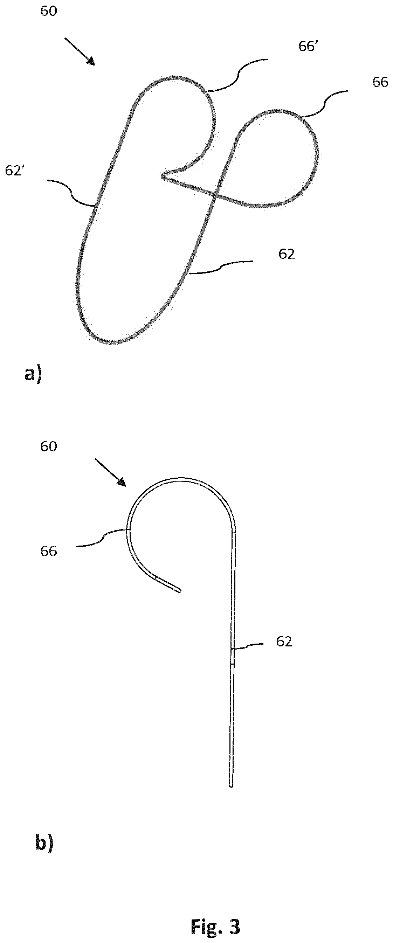

La figure 3 illustre un exemple de support sous forme d'une armature 60. L'armature est réalisée avec un fil métallique profilé pour former un cadre d'armature courbé coiffant un appui-tête, lorsque ladite armature est glissée par le dessus dudit appui-tête. Dans cette mode de réalisation l'antenne est de préférence réalisée sur un substrat souple permettant à l'antenne d'adopter la forme impartie par l'armature.

Dans l'exemple illustré, le cadre d'armature est déterminé par deux tiges 62, 62' parallèles et sensiblement verticales, chaque tige 62, 62' comportant un crochet 66, 66' dans une partie supérieure et dans un plan verticale, (détail b, fig. 3), et étant reliées par un segment en « U » à leur partie inférieure (détail a, fig. 3). La partie du cadre d'armature en forme des tiges 62, 62' reliés en « U » détermine une partie avant de l'armature destinée à être posée sur la face avant d'un appui-tête, et à s'étendre de préférence de l'extrémité supérieure de l'appui-tête jusqu'à son extrémité inférieure. Les dimensions de l'armature sont donc définies en raison de l'appui-tête sur lequel ladite armature est destinée à être installée.

D'autre part, les crochets 66, 66' procurent la courbure nécessaire à l'armature pour s'adapter à, ou épouser, la partie supérieure de l'appui-tête de siège. Les crochets agissent également comme organes fixation permettant d'accrocher ou clipser l'armature à une face arrière de l'appui-tête. Pour améliorer la fixation, les deux crochets 66, 66' peuvent être reliés par une barre horizontale, augmentant ainsi la surface de contact avec la face arrière de l'appui-tête.

Le cadre d'armature courbée permet d'adapter l'orientation du champ magnétique émis par l'antenne pour qu'il soit capté par des personnes de différentes tailles. Par exemple, une personne de petite taille recevra principalement le champ projeté par la partie inférieure de l'antenne s'étendant jusqu'à la partie inférieure de l'appui-tête, pendant qu'une personne de grande taille recevra principalement le champ émis par la partie supérieure de l'antenne, dont une partie est orientée vers le plafond à cause de la courbure de l'armature sur sa face supérieure.

Avantageusement, l'armature 60 du support de fixation est métallique pour permettre d'absorber une partie du champ magnétique créé par l'antenne et de limiter sa propagation dans des zones voisines où ce champ n'est pas utile, et donc de limiter la diaphonie de l'antenne. L'armature est de préférence recouverte par une housse décorative optionnellement rembourrée. La housse de l'armature peut être recouverte également d'un tissu amovible jetable.

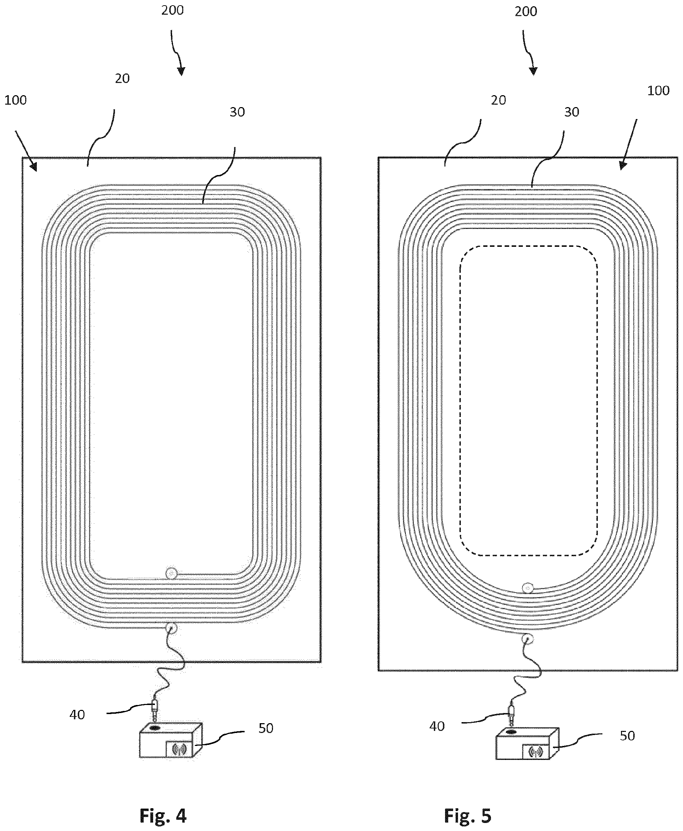

Les figures 4 et 5 montrent des exemples d'un système 200 de transmission sonore à boucle magnétique comportant une antenne 100 sur circuit imprimé souple suivant l'invention. Dans ce système, l'antenne est reliée à un boîtier radio 50 comportant au moins un récepteur radio à hautes fréquences, un amplificateur basses fréquences avec une sortie jack, et une batterie rechargeable. Le boîtier radio 50 est par exemple un récepteur radio ultra hautes fréquences avec une gamme de fréquences porteuses de 794 à 937 MHz.

Le système 200 permet de capter des signaux sonores par radio fréquences, et de les transmettre au moyen de l'antenne sous forme d'un champ d'induction magnétique basse fréquence. Lorsque l'antenne 100 est située à la hauteur du visage d'une personne, et notamment des oreilles, cette personne peut directement recevoir lesdits signaux sonores au moyen d'un appareil d'assistance audio. Bien entendu, l'appareil d'assistance audio à utiliser est compatible avec les systèmes de boucle magnétique et dispose d'un mode opératoire de réception inductif dit « T » pour « télé-boucle » (« Telecoil » en terminologie anglaise).

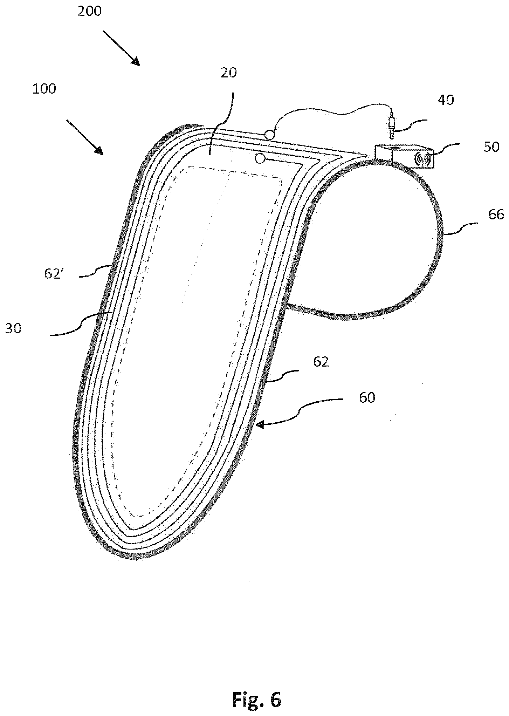

La figure 6 montre un exemple d'un système de transmission sonore comportant une armature pour la fixation du système à un appui-tête de siège. Dans ce mode de réalisation il est souhaité qu'une personne appui confortablement sa tête sur l'antenne lorsqu'elle est installée sur l'appui-tête, l'antenne est donc de préférence réalisée sur un substrat souple et avec un centre évidé (lignes pointillées fig. 6).

Le système ainsi obtenu est léger, portatif, autonome, et son installation sur un appui-tête de sièges ne présente pas de contraintes. Dans ce mode de réalisation l'armature 60 encadre partiellement l'antenne et reçoit également le boitier radio qui est fixé sur l'armature. Dans d'autres modes de réalisation non illustrées, la boucle de l'antenne peut s'étendre jusqu'à une partie arrière des crochets.

Dans un autre mode de réalisation du système (non illustré), les éléments du boitier radio sont intégrés directement dans le circuit imprimé de l'antenne, notamment le récepteur hautes fréquences, la batterie rechargeable, et un amplificateur audio.

L'invention concerne également un siège rembourré dans lequel est installée l'antenne de l'invention entre un coussin et une housse de l'appui tête dudit siège. Avantageusement, ladite housse est réalisée avec des moyens de fermeture/ouverture permettant d'installer et de retirer l'antenne du siège facilement. Ce siège peut correspondre par exemple à un siège de véhicule de transport ou le siège d'une salle de cinéma ou d'autre type de salle.

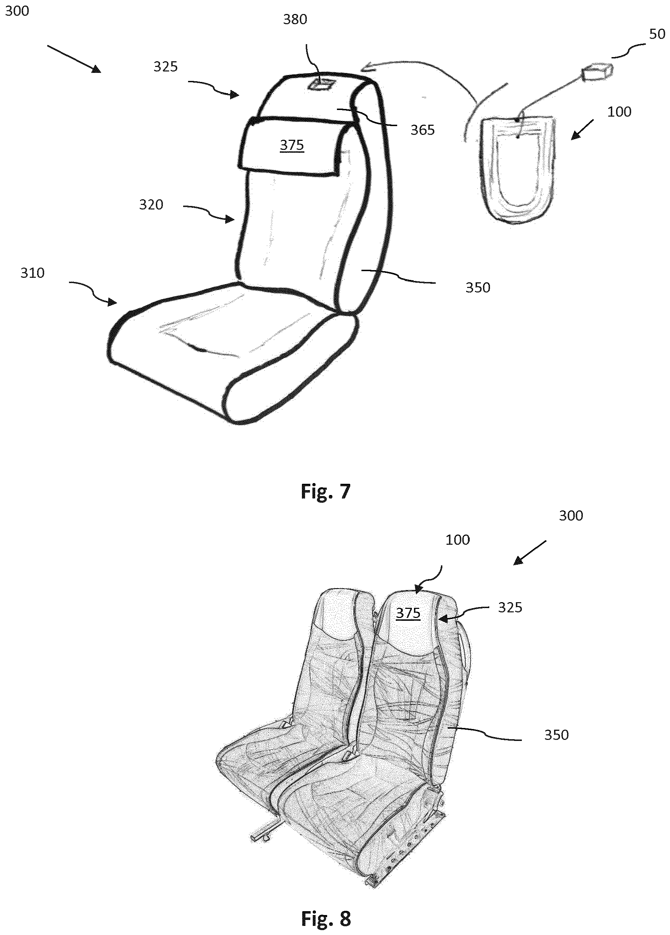

Selon le mode de réalisation illustré sur la figure 7, le siège 300 de l'invention comporte au moins un assis 310 et un dossier 320 intégrant un appui-tête de siège 325 dans une portion supérieure dudit dossier. En particulier, le dossier dudit siège comporte une housse 350 et un rembourrage formant un coussin 365 dans la partie du dossier agissant comme appui-tête 325.

L'invention propose d'installer l'antenne 100 de l'invention avec un boîtier radio 50 à hautes fréquences sur le coussin 365 d'appui-tête ,et en dessous de la housse. Avantageusement le coussin 365 comporte un logement 380 de boîtier pour installer le boîtier radio 50 relié à ladite antenne 100 sans créer un encombrement dans ledit appui-tête de siège.

Dans un autre mode de réalisation non illustré, le logement 380 est apte à recevoir à son intérieur le boîtier radio et l'antenne.

L'antenne et le boitier radio sont ainsi positionnés sur le coussin et en dessous de la housse, permettant d'installer l'antenne de l'invention sans altérer visuellement l'extérieur d'un siège (Figure 8).

L'antenne destinée à être intégrée dans un appui-tête de siège est de préférence réalisée sur un substrat 20 souple, l'antenne suivra donc la forme de l'appui tête de siège orientant son champ magnétique suivant la courbature dudit appui-tête.

Comme illustré sur la figure 7 et la figure 8, la housse 350 du dossier comporte un segment têtière 375 destiné à recouvrir au moins partiellement la portion du dossier correspondant à l'appui-tête 325 de siège, et comportant le coussin 365. Le segment têtière 375 comporte avantageusement des moyens d'ouverture/fermeture permettant de donner accès au coussin 365 et à l'installation aisée de l'antenne de manière réversible.

Les moyens d'ouverture fermeture sont par exemple présents sur le périmètre externe du segment têtière 375 ou au moins sur une partie de ce périmètre, ils peuvent correspondre à des fermetures éclair ou des glissières, des boutons, des fermetures auto-agrippantes ou tout autre moyen d'ouverture/fermeture connu par l'homme du métier pour des revêtement de sièges ou pour des vêtements. L'antenne et son boîtier pourront être ainsi facilement installés dans ledit appui-tête de manière réversible, permettant de déplacer facilement l'antenne et son boîtier radio, qu'on peut nommer également système de transmission sonore selon l'invention. Dans ce mode de réalisation, l'antenne peut être protégée par un revêtement ou une housse additionnelle pour être manipulée sans l'endommager.

L'invention propose d'implémenter l'antenne l'invention dans une cabine d'un véhicule de transport de passagers, tel qu'un autocar. À cette fin, l'antenne est installée individuellement sur ou dans un appuie-tête de siège, de manière amovible, permettant aux personnes malentendantes de déplacer cette antenne au siège de leur convenance. L'installation de l'antenne ou du système de transmission sonore de l'invention peut être réalisée au moyen d'un support de fixation ou par son intégration dans un siège tel que décrit avant. La cabine peut être équipée d'autant d'antennes 100, de systèmes 200 de transmission sonore, et de sièges 300 qu'il soit souhaité, inclusive la totalité de sièges.

Pour la mise en oeuvre de l'antenne dans une cabine, un émetteur radio récupère les signaux sonores d'un haut-parleur de la cabine et transmet par radiofréquences ces signaux à tous les boîtiers radio présents dans la cabine. Les antennes reliées auxdits boîtiers radio transmettent ensuite ces signaux sous la forme d'un champ magnétique basse fréquence audible à travers des appareils d'assistance audio des passagers dont les sièges sont équipés de ces antennes.

L'antenne est facilement réutilisable et hygiénique car il n'est pas nécessaire un contact direct entre l'utilisateur et l'antenne, qui sont séparés physiquement par au moins une housse, et si souhaité un tissu de protection.

L'antenne, le système, et le siège de l'invention ne sont pas limités à des cabines de véhicules de transport public, mais peuvent s'étendre aux salles d'attente, de sport, de cinéma, et tout espace fermé intégrant de masses métalliques et muni de sièges.

## Revendications

1. Antenne (100) d'induction magnétique pour la transmission des signaux sonores à une personne malentendante porteuse de prothèses auditives équipées d'une télécoil et calibrées pour corriger le handicap de chacune des oreilles indépendamment, ladite antenne comportant une boucle en cuivre, et étant **caractérisée en ce que** :
- l'antenne est réalisée sous forme de circuit imprimé sur un substrat (20) souple ou rigide, et comporte une piste (30) en cuivre formant des multiples spires (S) adjacentes sur ledit substrat (20), et ;
- la longueur et la hauteur de la piste (30) en cuivre déterminent une impédance de l'antenne de 16 Ω à 60 Ω, et de préférence de 32 Ω.

2. Antenne selon la revendication 1, dans laquelle l'antenne a une impédance de 32 Ω et les spires (S) de la piste (30) forment un cadre déterminant une zone de projection localisée du champ magnétique émis par ladite antenne, et ledit cadre à une hauteur (H) comprise entre 15 cm et 40 cm.

3. Antenne selon l'une de revendications précédentes, comportant un connecteur (40) de type jack audio et un support de fixation pour installer ladite antenne sur un appui-tête de siège.

4. Antenne selon l'une des revendications précédentes, comportant une armature (60) encadrant au moins partiellement l'antenne, ladite armature étant réalisée avec un fil métallique profilé pour former un cadre d'armature courbé coiffant un appui-tête, au moins partiellement, lorsqu'il est glissé par le dessus dudit appui-tête.

5. Antenne selon la revendication 4, dans laquelle une forme du cadre d'armature est déterminée par deux tiges (62, 62') parallèles et sensiblement verticales, chaque tige (62, 62') comportant dans une partie supérieure et dans un plan perpendiculaire, un crochet (66, 66') déterminant une courbure de l'armature, des extrémités des crochets (66, 66') étant reliées optionnellement entre elles, et les extrémités inférieures des tiges (62, 62') étant prolongées et reliées entre elles par un segment en « U ».

6. Système (200) de transmission sonore à boucle magnétique pour des personnes malentendantes porteuses d'un appareil d'assistance audio, ledit système comportant une antenne (100) selon l'une quelconque des revendications précédentes et une source de signaux sonores comportant une sortie audio de type casque, dans lequel l'antenne (100) est reliée à ladite source de signaux sonores et transmet lesdits signaux sonores sous forme d'un champ magnétique compatible avec ledit appareil d'assistance audio de la personne malentendante.

7. Système de transmission sonore selon la revendication 6, dans lequel la source des signaux sonores est un boîtier radio (50) comportant une batterie rechargeable, un amplificateur basses fréquences avec une sortie audio jack, et un récepteur radio hautes fréquences recevant par radio fréquences des émissions sonores à transmettre par l'antenne.

8. Système de transmission sonore selon la revendication 6, dans lequel la source des signaux sonores est intégrée sur le circuit imprimé de l'antenne (100) et comporte au moins un récepteur radio hautes fréquences et un amplificateur basses fréquences.

9. Système de transmission sonore selon l'une quelconque des revendications 7 ou 8, comportant un émetteur radio transmettant par radio fréquences au récepteur radio hautes fréquences les signaux sonores d'un haut-parleur ou de toute autre source des signaux sonores.

10. Système de transmission sonore suivant l'une de revendications 7 à 8, comportant une borne de recharge portative comportant un ou plusieurs emplacements de recharge compatibles avec un ou plusieurs boîtiers radio (50) du système (200).

11. Siège (300) rembourré comportant une antenne (100) selon l'une des revendications 1 ou 2 dans un appui-tête (325) dudit siège, dans lequel :
- l'antenne comporte un boîtier radio (50) autonome et hautes fréquences recevant par radio fréquences des émissions sonores à transmettre par l'antenne, et ;
- l'appui-tête comporte un coussin (365) recouvert par une housse, ledit coussin comportant un logement (380) de boîtier,
et dans lequel l'antenne est installée sur le coussin (365) avec son boitier radio (50) à l'intérieur du logement (380), et en-dessous de ladite housse.

12. Siège selon la revendication 11, dans lequel le logement (380) du coussin (365) comporte des dimensions adaptées à recevoir le boitier radio (50) et l'antenne (100), et ledit boitier radio (50) et ladite antenne (100) sont installés dans ledit logement (380).

13. Siège selon l'une quelconque des revendications 11 ou 12, dans lequel le siège comporte un dossier (320) intégrant l'appui-tête (325) dans une portion supérieure dudit dossier, ledit dossier (320) comportant un rembourrage formant en outre le coussin (365) d'appui-tête recevant l'antenne (100) et le boîtier radio (50), et dans lequel le dossier comporte une housse (350) présentant un segment têtière (375) recouvrant au moins partiellement le coussin (365), et ledit segment têtière de la housse comporte au moins un moyen d'ouverture/fermeture pour accéder à l'antenne (100) et au boîtier radio (50).

14. Cabine d'un véhicule de transport de passagers comportant au moins un système de transmission sonore selon l'une des revendications 6 à 10, ou au moins un siège selon l'une des revendications 11 à 13.

## Patentansprüche

1. Magnetische Induktionsantenne (100) zur Übertragung von Schallsignalen an eine hörgeschädigte Person, die Träger von Hörgeräten ist, die mit einer Telefonspule ausgestattet sind, und kalibriert, um die Behinderungen jedes der beiden Ohren unabhängig voneinander zu korrigieren, wobei die Antenne eine Schleife aus Kupfer aufweist, und **dadurch gekennzeichnet ist, dass**:
- Die Antenne als Leiterplatte auf einem Substrat (20), flexibel oder starr, erstellt ist, und eine Kupferbahn (30) aufweist, die mehrere benachbarte Windungen (S) auf dem Substrat (20) bildet, und;
- die Länge und die Höhe der Kupferbahn (30) eine Impedanz der Antenne von 16 Ω bis 60 Ω bestimmen, vorzugsweise von 32 Q.

2. Antenne nach Anspruch 1, wobei die Antenne eine Impedanz von 32 Ω hat und die Windungen (S) der Bahn (30) einen Rahmen bilden, der einen lokalisierten Projektionsbereich des Magnetfelds bestimmt, das von der Antenne emittiert wird, und der Rahmen eine Höhe (H) zwischen 15 cm und 40 cm hat.

3. Antenne nach einem der vorhergehenden Ansprüche, einen Steckverbinder (40) vom Typ Klinkenstecker aufweisend und eine Befestigungshalterung zum Anbringen der Antenne an einer Kopfstütze eines Sitzes.

4. Antenne nach einem der vorhergehenden Ansprüche, eine Verstärkung (60) aufweisend, die die Antenne mindestens teilweise einrahmt, wobei die Verstärkung mit einem profilierten Metalldraht erstellt wird, um einen gebogenen Verstärkungsrahmen zu bilden, der eine Kopfstütze mindestens teilweise abdeckt, wenn er über die Kopfstütze geschoben wird.

5. Antenne nach Anspruch 4, wobei eine Form des Verstärkungsrahmens durch zwei parallele und im Wesentlichen vertikale Stäbe (62, 62') bestimmt wird, wobei jeder Stab (62, 62') in einem oberen Abschnitt und in einer senkrechten Ebene einen Haken (66, 66') aufweist, der eine Biegung der Verstärkung bestimmt, wobei die Enden der Haken (66, 66') optional miteinander verbunden sind, und die unteren der Stäbe (62, 62') verlängert sind und durch ein U-Segment miteinander verbunden.

6. Magnetschleifen-Schallübertragungssystem (200) für hörgeschädigte Personen, die Träger eines Hörhilfegerätes sind, wobei das System eine Antenne (100) nach einem der vorhergehenden Ansprüche aufweist und eine Schallsignalquelle, die einen Audioausgang vom Typ Kopfhörer aufweist, wobei die Antenne (100) mit der Schallsignalquelle verbunden ist und die Schallsignale in Form eines Magnetfelds überträgt, das mit dem Hörhilfegerät der hörgeschädigten Person kompatibel ist.

7. Schallübertragungssystem nach Anspruch 6, wobei die Schallsignalquelle ein Funkgehäuse (50) ist, das eine wiederaufladbare Batterie aufweist, einen Niederfrequenzverstärker mit einem Klinkensteckerausgang und einen Hochfrequenzfunkempfänger, der über Funkfrequenzen Schallemissionen empfängt, die von der Antenne zu übertragen sind.

8. Schallübertragungssystem nach Anspruch 6, wobei die Schallsignalquelle in die Leiterplatte der Antenne (100) integriert ist und mindestens einen Hochfrequenzfunkempfänger und einen Niederfrequenzverstärker aufweist.

9. Schallübertragungssystem nach einem der Ansprüche 7 oder 8, einen Funksender aufweisend, der über Funkfrequenzen die Schallsignale eines Lautsprechers oder jeder anderen Schallsignalquelle an den Hochfrequenzfunkempfänger überträgt.

10. Schallübertragungssystem nach einem der Ansprüche 7 bis 8, eine tragbare Ladestation aufweisend, die einen oder mehrere Ladeplätze aufweist, die mit einem oder mehreren Funkgehäusen (50) des Systems (200) kompatibel sind.

11. Gepolsterter Sitz (300), eine Antenne (100) nach einem der Ansprüche 1 oder 2 in einer Kopfstütze (325) des Sitzes aufweisend, wobei:
- Die Antenne ein autonomes Hochfrequenz-Funkgehäuse (50) aufweist, das über Funkfrequenzen Schallemissionen empfängt, die von der Antenne zu übertragen sind, und;
- die Kopfstütze ein Kissen (365) aufweist, das von einem Bezug bedeckt ist, wobei das Kissen eine Gehäuseaufnahme (380) aufweist,
und wobei die Antenne auf dem Kissen (365) mit seinem Funkgehäuse (50) installiert ist, innerhalb der Aufnahme (380) und unterhalb des Bezugs.

12. Sitz nach Anspruch 11, wobei die Aufnahme (380) des Kissens (365) Abmessungen aufweist, die geeignet sind, das Funkgehäuse (50) und die Antenne (100) aufzunehmen, und wobei das Funkgehäuse (50) und die Antenne (100) in der Aufnahme (380) installiert sind.

13. Sitz nach einem der Ansprüche 11 oder 12, wobei der Sitz eine Rückenlehne (320) aufweist, die die Kopfstütze (325) in einem oberen Teil der Rückenlehne integriert, wobei die Rückenlehne (320) eine Polsterung aufweist, die auch das Kissen (365) der Kopfstütze bildet und die Antenne (100) und das Funkgehäuse (50) aufnimmt, und wobei die Rückenlehne einen Bezug (350) aufweist, der ein Kopfsegment (375) beinhaltet, das das Kissen (365) mindestens teilweise bedeckt, und das Kopfsegment des Bezugs mindestens eine Öffnungs-/Schließeinrichtung für den Zugang zur Antenne (100) und zum Funkgehäuse (50) aufweist.

14. Kabine eines Personenbeförderungsfahrzeugs, das mindestens ein Schallübertragungssystem nach einem der Ansprüche 6 bis 10 aufweist oder mindestens einen Sitz nach einem der Ansprüche 11 bis 13.

## Claims

1. A magnetic induction antenna (100) for transmitting sound signals to a hearing-impaired person wearing hearing aids equipped with a telecoil and calibrated to correct the handicap of each of the ears independently, said antenna including a copper loop, and being **characterised in that**:
- the antenna is made in the form of a printed circuit on a flexible or rigid substrate (20), and includes a copper track (30) forming multiple adjacent turns (S) on said substrate (20), and;
- the length and the height of the copper track (30) determine an impedance of the antenna of 16 Q to 60 Q, and preferably of 32 Q.

2. The antenna according to claim 1, wherein the antenna has an impedance of 32 Q and the coils (S) of the track (30) form a frame determining a localised projection area of the magnetic field emitted by said antenna, and said frame at a height (H) comprised between 15 cm and 40 cm.

3. The antenna according to one of the preceding claims, including a connector (40) of the audio jack type and a fastening bracket for installing said antenna on a seat headrest.

4. The antenna according to one of the preceding claims, including an armature (60) at least partially surrounding the antenna, said armature being made with a profiled metal wire to form a curved armature frame covering a headrest, at least partially, when slid over the top of said headrest.

5. The antenna according to claim 4, wherein a shape of the armature frame is determined by two parallel and substantially vertical rods (62, 62'), each rod (62, 62') including in an upper part and in a perpendicular plane, a hook (66, 66') determining a curvature of the frame, ends of the hooks (66, 66') being optionally connected together, and the lower ends of the rods (62, 62') being extended and connected to each other by a "U" segment.

6. A magnetic loop sound transmission system (200) for hearing-impaired persons wearing an audio assistance apparatus, said system including an antenna (100) according to any one of the preceding claims and a source of sound signals including a headphone-type audio output, wherein the antenna (100) is connected to said source of sound signals and transmits said sound signals in the form of a magnetic field compatible with said hearing impaired person's audio assistance apparatus.

7. The sound transmission system according to claim 6, wherein the source of the sound signals is a radio case (50) including a rechargeable battery, a low-frequency amplifier with an audio output jack, and a high-frequency radio receiver receiving by radio frequencies sound emissions to be transmitted by the antenna.

8. The sound transmission system according to claim 6, wherein the source of the sound signals is integrated on the printed circuit of the antenna (100) and includes at least one high-frequency radio receiver and one low-frequency amplifier.

9. The sound transmission system according to any one of claims 7 or 8, including a radio emitter transmitting by radio frequency to the high frequency radio receiver the sound signals from a loudspeaker or any other source of sound signals.

10. The sound transmission system according to one of claims 7 to 8, including a portable charging station including one or more charging slots compatible with one or more radio cases (50) of the system (200).

11. A padded seat (300) including an antenna (100) according to one of claims 1 or 2 in a headrest (325) of said seat, wherein:
- the antenna includes an autonomous and high frequency radio case (50) receiving by radio frequencies sound emissions to be transmitted by the antenna, and;
- the headrest includes a cushion (365) covered by a cover, said cushion including a case housing (380),
and wherein the antenna is installed on the cushion (365) with its radio case (50) inside the housing (380), and below said cover.

12. The seat according to claim 11, wherein the housing (380) of the cushion (365) includes dimensions adapted to receive the radio case (50) and the antenna (100), and said radio case (50) and said antenna (100) are installed in said housing (380).

13. The seat according to any one of claims 11 or 12, wherein the seat includes a backrest (320) incorporating the headrest (325) in an upper portion of said backrest, said backrest (320) including a padding forming in addition to the headrest cushion (365) receiving the antenna (100) and the radio case (50), and wherein the backrest includes a cover (350) having a headrest segment (375) at least partially covering the cushion (365), and said headrest segment of the cover includes at least one opening/closing means for accessing the antenna (100) and the radio case (50) .

14. A cabin of a passenger transport vehicle including at least one sound transmission system according to one of claims 6 to 10, or at least one seat according to one of claims 11 to 13.
